# EUROPEAN PATENT SPECIFICATION

(11) **EP 2 873 842 B1**
(45) Date of publication and mention of the grant of the patent: **28.02.2018**
(21) Application number: 13192903.6
(22) Date of filing: 14.11.2013
(51) Int. Cl.: F02D 41/20, F02M 21/02, F02D 19/02

(54) **Control of Actuation of Fuel Injector**
Steuerung der Betätigung eines Kraftstoffeinspritzventils
Commande d'actionnement d'injecteur de carburant

(43) Date of publication of application: 20.05.2015
(73) Proprietor: Delphi Automotive Systems Luxembourg SA, 4940 Bascharage (LU)
(72) Inventor: RAVENDA, François, 54400 Longwy (FR)
(74) Representative: Delphi France SAS

(56) References cited:
- EP-A1- 1 369 571
- EP-A1- 2 083 159
- EP-A1- 2 613 044
- WO-A2-2012/152835
- WO-A2-2012/172351
- GB-A- 2 487 218
- JP-A- 2000 145 566
- US-A1- 2005 119 819
- US-A1- 2010 145 597

## Description

### Field of the Invention

This invention relates to fuel injectors, and has particular but non-exclusive application to direct gas injectors such as those that are adapted to discharge hydrogen, natural gas, etc.

### Background to the Invention

Current injectors for direct gas injection typically provide for an outwardly opening injector. The operation of such injectors is generally as follows: typically using a solenoid actuator, an injector solenoid coil is energized and the armature of the actuator moves towards a pintle/needle. The pintle/needle is moved downwardly away from a valve seat and the valve opens. This allows pressurized gas to exit the valve into a combustion space at an angle that is function of the pintle/seat configuration. When the solenoid is de-energized, the armature moves upwards and the valve closes.

Typically a solenoid fuel injector is energized by an electronic driver to achieve a specific valve controlled motion. This drive scheme is adapted based on performance criteria such as minimum injection quantity (Q_min), part-to-part injection variation, robustness against operating conditions and ageing, noise and other criteria. Some of these criteria are interdependent and thus trade-offs are usually made when optimizing the drive scheme.

WO2012/172351A2 discloses a fuel injector with a control unit that creates a pulse with modulated voltage with a longer voltage pulse duration during the needle opening phase and a shorter voltage pulse width during the holding phase such that a higher peak current and a lower holding current are created.

A problem with such injectors concerns axial wear of internal sub components as a results of contacts between them over actuation phases during opening and closing phases. Wear phenomenon is exacerbated in gaseous environments due to poor lubrication provided by the medium. During actuation, surfaces of pintle/armature contact each other at certain speeds. As a result of impact/contact speeds from hydraulic forces, magnetic forces and spring forces acting on the pintle/armature assembly. Design parameters such as spring settings, sealing surface area or coil dimensions are such as to achieve primary fueling function and the consequential impact speeds are consequently dictated by the injector's primary function. An important consideration is the impact of armature to the pole piece.

It is an object of the invention to overcome problems with prior art injectors and furthermore to reduce the problems and wear arising from impact of armature to pole piece whilst at the same time provide the necessary performance criteria.

In one aspect is provided a novel closed-loop control algorithm that can be used to enhance injector performance while increasing its mechanical robustness via a reduction of the mechanical impact stresses such as the impact of armature on pole-piece during injector operation.

### Statement of the Invention

In a first aspect is provided a method of controlling a fuel injector including a solenoid actuated valve arrangement, said valve arrangement including an armature adapted to be in contact with a proximal end of a valve needle comprising applying a current profile to said solenoid; wherein said profile comprises a peak phase where the current is ramped to a peak/demand value, followed by a transition phase, where the demand value of current is set to a value substantially lower than the peak value, followed by a by-pass phase where the current is set/ ramped to a by-pass/demand level. According to the invention, said transition current is substantially zero.

The method includes a hold phase after the by-pass phase where the demand current is set to a hold level which is lower than the by-pass level.

The method includes monitoring the current though the solenoid during the by-pass level and determining the point at which inflection occurs.

The component of induced current may be monitored.

The point of contact between the armature and pole piece and/or the maximum travel of the needle/pintle is determined to be the point of inflection.

One or more parameters of the drive profile are adjusted dependent on the point of inflection. Such parameters may be peak current, duration of peak phase/start of transition phase, transition period, and by-pass period/level.

The solenoid demand current may be provided by pulse width modulation control.

During the by-pass phase, the demand current at least initially is set to a level sufficient that toggling/chopping does not take place before said point of inflection.

The start of the transition phase may be set at a function of the point of /inflection.

The start of the transition phase is preferably set at around 75% of the time of the point of inflection.

In one aspect the invention thus provides a solution to reduce and control opening speed via so as to reduce component stresses (for example of the armature/pole piece, whilst ensuring the desired fueling function at t=0. The invention thus consequently reduces ageing of injector components.

### Brief Description of Drawings

The invention will now be described by way of example and with reference to the following figures of which:
Figures 1a and 1b show the general design of a gaseous fuel injector;
Figures 2a and b shows a schematic diagram showing the armature portion and illustrating the movement of the armature relative to the actuator pole piece;
Figure 3 shows a plot of a drive strategy used in conventional injector systems and the corresponding pintle displacement versus time.
Figure 4 shows the displacement of the needle/pintle for different peak levels of current at different operating conditions (N1 and N2) with conventional peak hold strategy
Figure 5 shows a drive profile according to examples of the invention.
Figure 6 shows a less schematic version of figure 5b and includes the corresponding pintle displacement
Figure 7 shows a trace of the current through the solenoid and the corresponding pintle displacement against time.
Figure 8 shows a flow chart of showing the implementation of a control strategy using peak current as variable to control opening time.
Figure 9 show the results evaluating the detection capability of an embodiment.

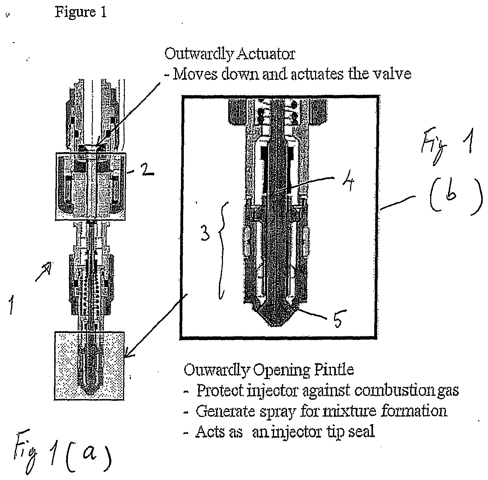

**Figure 1a** shows a schematic representation of a fuel injector 1 to which the invention can be applied and shows an actuator portion 2 which may be provided by a magnetically actuated solenoid. When actuated, a solenoid armature is (by e.g. electrically activating a solenoid) forced downwards. The armature contacts the upper portion of a valve needle/pintle so as to impart movement to it. When the actuator is energized the valve is thus moved downwards and so the distal end of the needle is moved downwards also in a direction away from the seat to allow injection of gaseous or other fuel. Although in the example the injector needle moves away from the seat to inject fuel, aspects of the application can be applied to arrangements where valve needles are moved upwardly away form a valve seat to release fuel. Figure 1b shows the distal end 3 of the fuel injector in more detail showing the needle 4 and valve seat 5.

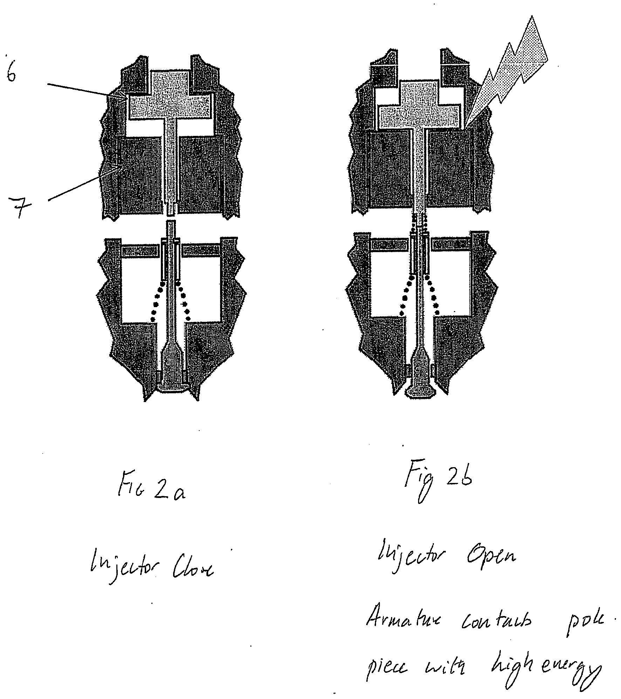

**Figure 2a** **and b** shows in more detail the armature portion of the injector of figure 1 and illustrates the relative movement of armature 6 and pole piece 7 during operation of valve. The armature is movable as a result of current through a solenoid (not shown in the figure) located within the valve housing 8. The end of the armature is generally in contact with the proximal portion of the valve needle/pintle 4. During operation, downward movement of the armature provides corresponding downward movement of the valve needle, and thus movement of the distal end of the needle away from a valve seat 5. As shown by the lightning sign in the figure, during operation, there is contact between the armature and pole piece,

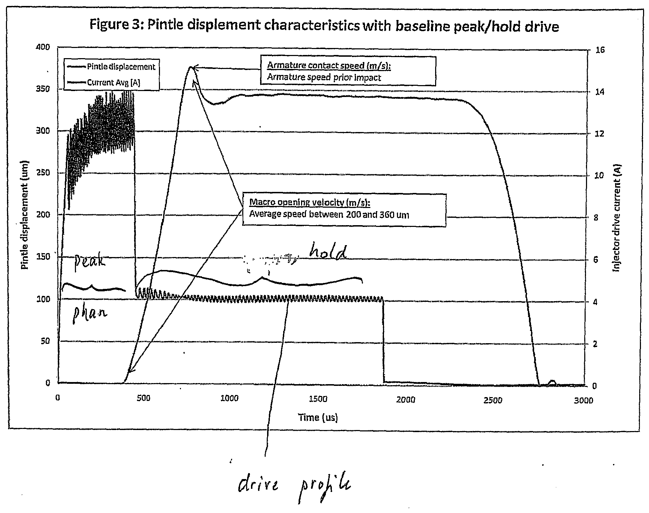

**Figure 3** shows a known drive profile for fuel injector actuator. In a first (peak) phase 9 the profile provides a relatively high value of peak current through the solenoid. Typically this is achieved by the solenoid controllers setting is typically via pulse width modulation; thus an applied voltage is stepped up to a certain level until the desired demand level is achieved. Once this is achieved the PWM steps the voltage down to zero to prevent any increase in current above the demand (threshold). Again when the value of current falls below a certain value, the PWM voltage is stepped up to the nominal level. Thus under such PWM control when the desired level of current is achieved, the currents toggle around the desired level. This is often referred to as "chopping".

After the peak phase the value of the current is reduced to a hold current level. It is during this period that the armature contacts the end of the pole piece. After the holed phase the current is set to zero once request received to stop injecting.

Thus the current thought the solenoid actuator is controlled i.e. regulated by the applying pulse width modulated voltage to the actuator. Feedback control is known, to provide the desired current profile in prior art systems. Thus figure 3 shows a typical trace of the prior art current that is sent through the actuator. As can be seen there is a first phase where the current sent through is ramped up to a peak and this current maintained for a short duration; in this phase the armature and pintle are accelerated downwardly. After this, a hold phase with a lower current level is provided and it is during this phase that the armature contacts the pole piece.

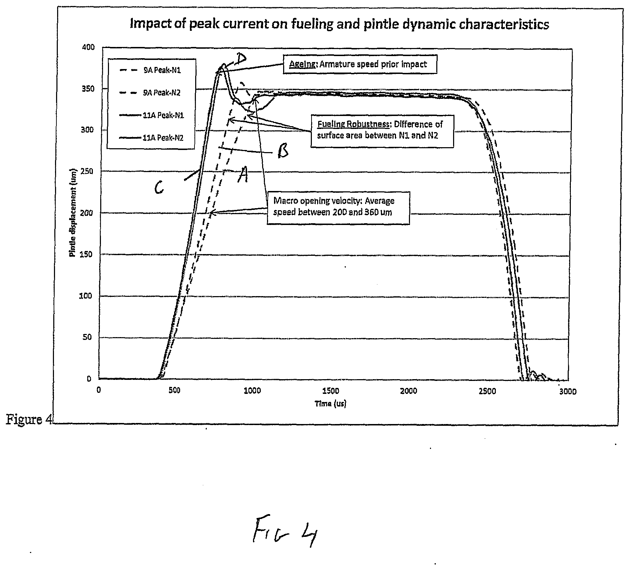

**Figure 4** shows the displacement of the needle/pintle for different peak levels of current. Different valve conditions may exist and arise from typically unknown factors such as fuel over- pressure, varying component tolerances and such like (N1 and N2 represent different conditions. The level Z shows the displacement at contact. As can be seen the displacement of the pintle is often higher than the long term contact displacement of the pintle; this is due to the compression resulting from contact of impacting components. This is of course undesirable and it can lead to deterioration and wear of valve components.

As can be seen, the higher the peak current, the more abrupt and harsh the contact is as seen from the corresponding displacement profiles. In the other hand, aggressive profile ensure robustness over variation of operating conditions (N1 and N2

A reduced activation current as seen in plots A and B provides a smoother contact than higher contact levels such as plots C and D; however operation is more sensitive to variation of operating conditions

As mentioned in the introduction, a trade off exist while optimizing fueling performance criteria. Typically injector drive profiles are controlled so as to rapidly drive the current through the solenoid to a peak, and after a while to reduce the level of current through the coil. This is typically referred to as "baseline peak hold strategy". Injector drive profiles are generally tuned aggressively to ensure performance robustness over operating conditions variation or part to part. However this induces significant level of stresses within components of the injector. This is partially overcome at the design level leading to cost and complexity.

Thus in to recap in conventional peak /hold drive strategies, to ensure fueling robustness over operating conditions, part to part, , etc, drive scheme profile are tuned aggressively to ensure robustness over potential noise/variation. This results in significant impact forces over injector life; as mentioned to reduce these design complexity, and cost is increased.

### Detailed Description of the Invention

### Aspect 1

In a basic aspect of the invention, the drive profile is such that after the peak phase there is a shutting off of the magnetic field for a duration before applying the by-pass phase (i.e. by-pass current). In other words, in one aspect, the invention comprises reducing the current through the solenoid to a very low level (preferably zero) after the initial peak phase before the by-pass phase. The current can be regulated by control of pulse width modulation of the voltage applied to the solenoid.

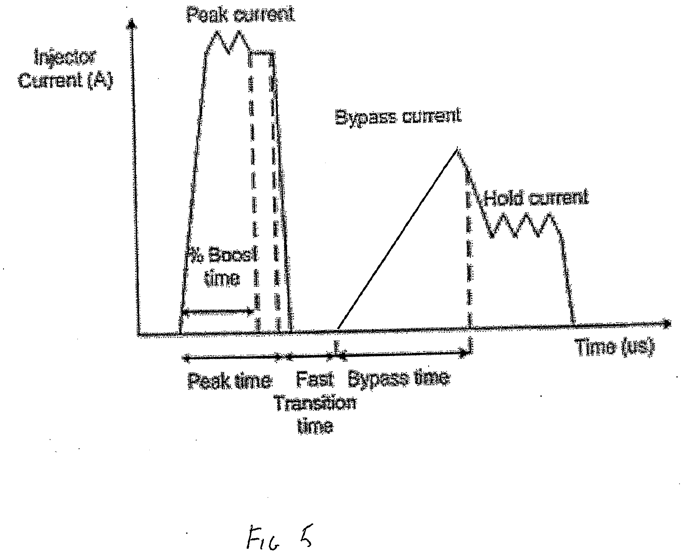

This reduction of current to zero or reduced levels is applied before armature impact on the pole piece. In other words as shown in **figure 5****,** after the peak phase, the current (demand) is set to zero (or lower value). This level of current may be maintained for a short time before reapplying a by-pass current. Optionally there may be a further phase after the by-pass phase referred to as a hold phase where the current is set at a further lower value so as to ensure that the needle is held in place .The phase of zero current between the between the peak phase and by-pass phase is referred to hereinafter as transition phase.

In other words there is a gap of substantially zero or reduced current in between the peak phase and the by-pass phase. By providing such a profile, impact force is reduced whilst providing the same level of opening speed. This provides for robustness in component wear. The timing of the start and end of the transition phase can be selected and determined to provide soft landing of the contacting components such as armature and pole piece, whilst at the same time providing for the requisite fuel delivery characteristics. The skilled person would readily be able to determine or adjust the transition time (which may be dependent on peak current/peak duration and by-pass current level, from e.g. test or statistical data.

So **figure 5** shows drive profile according to a further aspect of the invention, which will be explained in more detail later. It includes a by-pass-phase where the current is ramped over a time to a peak by-pass value.

### Aspect 2

According to a preferred embodiment, the influence of induced current in the solenoid as a result of armature movement is used to provide information on needle/pint and/or armature movement. These data are used to control and adjust parameters of the drive profile.

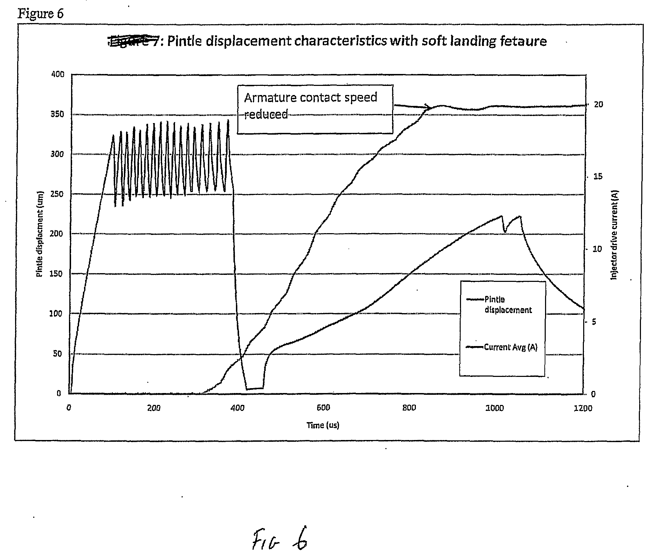

Thus according to one aspect, feedback control is used wherein monitored current in the solenoid which includes a component of induced current, is used to determine the point of impact of armature and the end of the pole piece/end displacement of the needle/pintle. **Figure 6** shows a less schematic profile similar to that shown in figure 5 and includes the corresponding pintle displacement. According to the invention, as shown, a peak phase is applied as described above followed by a transition phase such that the transition current is substantially zero. As before a by-pass phase is initiated wherein a by-pass current is set. This is set to a level high enough such that toggling/chopping does not occur - in other words the voltage is set high. As a result of this the profile as in figure 5 is provided. The inventors have determined that as will be explained in more detail hereinafter, in the current trace, there is a point of inflection corresponding to when the armature contacts the pole piece.

This allows the point of contact (in terms of time) to be determined and used to control i.e. adjust drive profile parameters as will be explained in more detail hereinafter. In other words the time/point of contact is used to control and adjust other parameters of the drive profile. Preferably this feedback control is used to control/adjust the peak current or peak current duration or transition duration or by-pass current level.

Preferably the voltage to the solenoid is switched off/ start of the transition phase, is set at a around a value of 75% displacement of the pintle/needle. It would be clear to the skilled person what an appropriate point is set at and can depend on the design, operating or other parameters and can be optimized via e.g. testing. The invention provides a comparable level of valve opening speed to prior art systems whilst at the same time providing a lower impact speed; i.e. providing an improved characteristic of slower impact whilst at the same time retaining the desired fuel delivery characteristics independently of operating condition variation

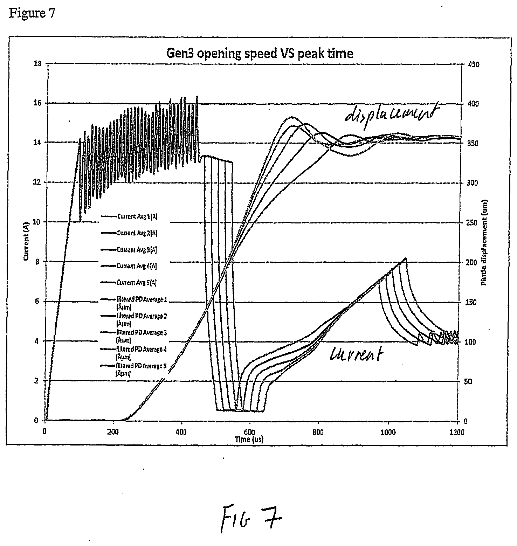

**Figure 7** illustrates in more detail this aspect of the invention and shows a number of actual plots of the injector current against time resulting from implementing control methodology according to this aspect. It shows traces of the current through the solenoid over time and the corresponding pintle displacement against time; the duration of peak phase is varied to achieve desired impact speed while opening speed remains similar

Figure 7 demonstrates the capability of the invention to reduce armature contact speed while maintaining similar opening speed. Furthermore, it can be observed that this achieved via adjustment of one variable (fast transition time in this case). Also that armature contact time corresponded to change in current rise up slope within bypass phase

Again similar to the schematic figure 6 there is a peak phase where the pintle/needle is accelerated.

Thereafter follows a transition phase, of zero current, i.e. after the peak phase the solenoid current demand is set to zero and the applied voltage adjusted accordingly. Alternatively, not part of the invention, the transition phase just reduces the applied voltage to zero. According to the invention, after the transition phase, a demand level (by-pass level) of current is set. This level is set high enough such that chopping or toggling does not occur before contact of the solenoid to the pole piece. Thus with typical PWM the nominal voltage across the solenoid is set high.

It is during this phase that the actual solenoid current is measured monitored and anaylsed. The monitored current includes a component which is induced e.g. effectively caused by a back EMF as a result of relative movement of the armature and the coil. As can be seen from the figure there are point of inflection which correspond to the maximum travel of pintle/needle and the impact of armature on the pole piece.

During the by-pass phase the needle/pintle is still moving as is the armature and the induced current in the solenoid is monitored. The inventors have determined as can be seen from the current trace, that there are points of inflection corresponding to the point of impact. This allows the point of contact (in terms of time) to be determined. Thus the current/time profile can be analysed for such inflection point and used to determine the time contact time. This can then be used to control and adjust various parameters such as the peak voltage/current, duration of peak phase, duration of fast transition time, by-pass current, values. These parameters can either be adjusted in absolute terms such as current or time, or as proportions of each other. As mentioned it necessary to set the demand current to a sufficiently high level such that there is no chopping of the current during the time in which the monitoring takes place.

After the by-pass phase there is a "hold" phase where the voltage is provided to retain the needle/pintle in position.

Preferably the peak current level, peak phase duration, transition time and/or by-pass level are controlled to provide the requisite movement of the pintle/needle and/or displacement or armature to ensure soft landing whilst ensuring fuel delivery requirements.

The occurrence of when contact occurs can be compared with the ideal or set time, possibly varied dependent on conditions, and thus drive profile adjusted appropriately. This comparison may be relative to adjustable parameters of peak current /voltage, peak time, transition time and by-pass and voltage/current.

In a preferred embodiment timing of the end of the peak phase, that is start of transition the phase is set around 75% of the needle/pintle displacement.

To recap, according to one example; the first phase is a peak phase where the current through the solenoid is ramped up rapidly to a peak (demand) level. As a result the pintle starts to move downward. When the pintle has moved about 75%of its downward displacement, as estimate from the feedback, the current is reduced/set to zero (or a low level) during a transition phase. Following this is a by-pass phase where the current is ramped to a bypass level for a duration, and thereafter the current is held at a hold level before moving to zero. Points of inflection during the by-pass phase give the time of contact/maximum travel of the needle. The point at which a certain (e.g. 75%) percentage of needle/pintle or armature displacement can be determined from this. Thus one important feature of an aspect of the invention is providing means to detect armature/pole piece contact and thus the maximum travel of the pintle/needle by monitoring the change in current (ie di^2/dt=0), the current being that during the by-pass phase when there is no chopping or toggling of the PWM control. The term "point of inflection" is thus defined as a point where the second derivative of current is zero".

The invention provides a closed loop control of valve opening top provide soft landing strategy of slower impact whilst at the same time retaining the desired fuel delivery characteristics over variation of operating conditions.

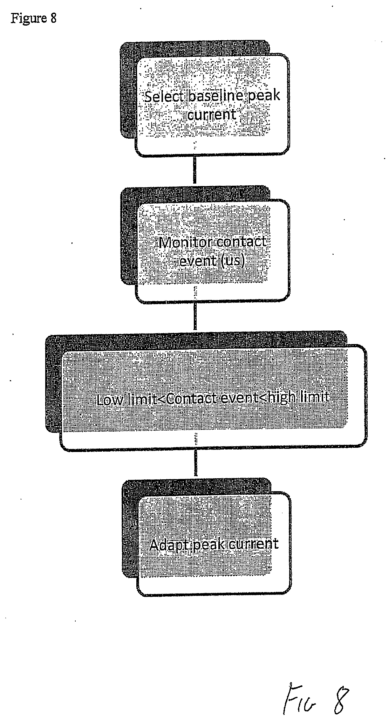

**Figure 8** shows a flow diagram illustrating the closed loop control of the voltage applied to the valve actuator (solenoid) to provide the desired characteristic. In step 1, a baseline peak current is selected; this is the current value to which the current through the coil is ramped up in a fist (peak phase). Thus a voltage is applied to the solenoid (accordingly to provide this current value to initiate displacement of pintle/needle so as to open the valve) and commences with a rapid increase in applied current to a peak1. After this, power to the valve solenoid is switched off in a transition phase; the current demand is set to zero.. After a time, a by-pass phase is applied and then later a hold phase is applied. There is a step of measuring the current (induced) in the coil during the by-pass phase. The current trace is monitored to detect point of inflection to determine the actual contact (of armature/pole piece). The time at which this occurs is compared with a desired value, and depending on this comparison one or more parameters such as the value of peak current, transition time and such are adjusted in order so that the contact time coincides with the desired time (absolute or relative).

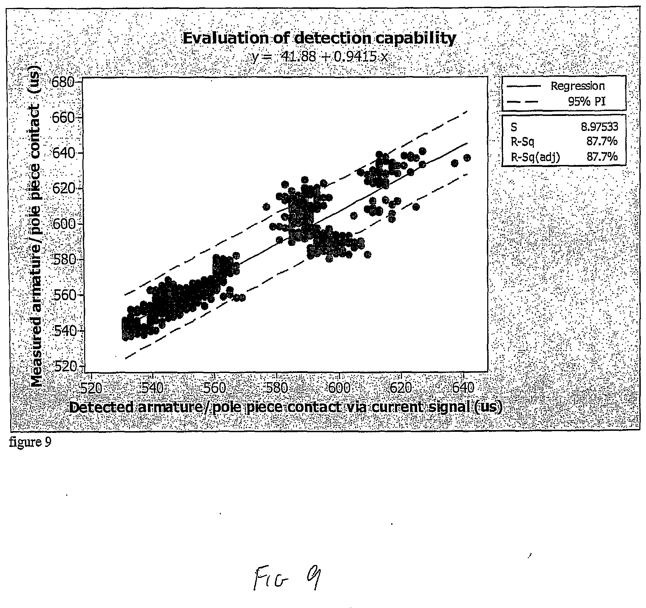

Figure 9 shows the results of using an embodiment of the invention for evaluating the detection capability of an embodiment. The graph compares the actual contact time measured in a laboratory with the detected contact time determined from the above methodology.

## Claims

1. A method of controlling a fuel injector including a solenoid actuated valve arrangement, said valve arrangement including an armature adapted to be in contact with a proximal end of a valve needle comprising applying a current profile to said solenoid; wherein said profile comprises a peak phase where the current is ramped to a peak/demand value, followed by a transition phase, where the demand value of current is set to a value substantially lower than the peak value such that the transition current is substantially zero., followed by a by-pass phase where the current is ramped up to a by-pass/demand level, and including a hold phase after the by-pass phase where the demand current is set to a hold level which is lower than the by-pass level, including monitoring the current though the solenoid during the by-pass phase and determining the point at which inflection occurs, including adjusting one or more parameters of the drive profile dependent on the point of inflection, where the start of the transition phase is set at a function of the point of inflection, the point of inflection being the point of contact between the armature and pole piece and/or the maximum travel of the needle/pintle.

2. A method as claimed in claims 1 wherein one or more of the following parameters are adjusted: peak current, duration of peak phase/start of transition phase, transition period, and by-pass period/level.

3. A method as claimed in claims 1 or 2 where the solenoid demand current is provided by pulse width modulation control.

4. A method as claimed in claims 1 to 3 wherein during the by-pass phase, the demand current at least initially is set to a level sufficient that toggling/chopping does not take place before said point of inflection.

5. A method as claimed in claim 1 to 4 wherein the start of the transition phase is set at around 75% of the time of the point of inflection.

6. A fuel injector control system including a fuel injector having a solenoid actuated valve arrangement, said valve arrangement including an armature adapted to be in contact with a proximal end of a valve needle adapted to implement any of the method claims 1 to 5.

## Patentansprüche

1. Verfahren zum Steuern eines Kraftstoffinjektors mit einer solenoidbetätigten Ventilanordnung, wobei die Ventilanordnung einen Anker umfasst, der ausgebildet ist, in Kontakt mit einem proximalen Ende einer Ventilnadel zu sein, aufweisend ein Anwenden eines Stromprofils auf das Solenoid; wobei das Profil eine Spitzenphase aufweist, in der der Strom auf einen Spitzen/Bedarfswert ansteigt, gefolgt von einer Übergangsphase, in der der Bedarfswert des Stroms auf einen Wert gesetzt wird, der wesentlich niedriger als der Spitzenwert ist, derart, dass der Übergangsstrom im Wesentlichen null ist, gefolgt von einer Umgehungsphase, in der der Strom auf einen Umgehungs/Bedarfspegel ansteigt, und umfassend eine Haltephase nach der Umgehungsphase, in der der Bedarfsstrom auf einen Haltepegel gesetzt wird, der niedriger als der Umgehungspegel ist, umfassend ein Überwachen des Stroms durch das Solenoid während der Umgehungsphase und Bestimmen des Punkts, an dem eine Wendung stattfindet, umfassend ein Anpassen eines oder mehrerer Parameter des Ansteuerprofils abhängig von dem Wendepunkt, wobei der Beginn der Übergangsphase an einer Funktion des Wendepunkts gesetzt ist, wobei der Wendepunkt der Punkt eines Kontakts zwischen dem Anker und einem Polstück und/oder der maximale Weg der Nadel/des Stifts ist.

2. Ein Verfahren gemäß Anspruch 1, wobei einer oder mehrere der folgenden Parameter angepasst werden: Spitzenstrom, Dauer der Spitzenphase/Beginn der Übergangsphase, Übergangsperiode und Umgehungsperiode/-pegel.

3. Ein Verfahren gemäß den Ansprüchen 1 oder 2, wobei der Solenoidbedarfsstrom durch eine Pulsweitenmodulationssteuerung vorgesehen wird.

4. Ein Verfahren gemäß den Ansprüchen 1 bis 3, wobei während der Umgehungsphase der Bedarfsstrom zumindest anfänglich auf einen Pegel gesetzt wird, der ausreichend ist, dass kein Umschalten/Zerhacken vor dem Wendepunkt stattfindet.

5. Ein Verfahren gemäß den Ansprüchen 1 bis 4, wobei der Beginn der Übergangsphase bei etwa 75% der Zeit des Wendepunkts gesetzt wird.

6. Kraftstoffinjektorsteuersystem, das einen Kraftstoffinjektor mit einer solenoidbetätigten Ventilanordnung umfasst, wobei die Ventilanordnung einen Anker umfasst, der ausgebildet, in Kontakt mit einem proximalen Ende einer Ventilnadel zu sein, ausgebildet zum Implementieren der Verfahrensansprüche 1 bis 5.

## Revendications

1. Procédé pour commander un injecteur de carburant incluant un agencement formant valve actionné par solénoïde, ledit agencement formant valve incluant une armature adaptée pour être en contact avec une extrémité proximale d'un pointeau de valve, comprenant l'opération consistant à appliquer un profil de courant audit solénoïde ; dans lequel ledit profil comprend une phase de pointe dans laquelle le courant est augmenté en suivant une rampe jusqu'à une valeur de pointe/demande, suivie par une phase de transition dans laquelle la valeur de courant demandée est fixée à une valeur sensiblement plus basse que la valeur de pointe, de sorte que le courant de transition est sensiblement égal à zéro, suivie par une phase de by-pass dans laquelle le courant est augmenté en suivant une rampe jusqu'à un niveau de by-pass/demande, et incluant une phase de maintien après la phase de by-pass, dans laquelle la demande de courant est fixée à un niveau de maintien qui est plus bas que le niveau de by-pass, incluant l'opération consistant à surveiller le courant à travers le solénoïde pendant la phase de by-pass et à déterminer le point auquel se produit l'inflexion, incluant l'opération consistant à ajuster un ou plusieurs paramètres du profil de pilotage en dépendance du point d'inflexion, dans lequel le démarrage de la phase de transition est fixé en fonction du point d'inflexion, le point d'inflexion étant le point de contact entre l'armature et la pièce polaire et/ou le déplacement maximum du pointeau.

2. Procédé selon la revendication 1, dans lequel on ajuste un ou plusieurs des paramètres suivants : courant de pointe, durée de la phase de pointe/démarrage de la phase de transition, période de transition, et période/niveau de by-pass.

3. Procédé selon les revendications 1 ou 2, dans lequel le courant de demande du solénoïde est fourni par une commande avec modulation de largeur d'impulsion.

4. Procédé selon les revendications 1 à 3 dans lequel, pendant la phase de by-pass, le courant demandé au moins initialement est fixé à un niveau suffisant pour qu'il ne se produise pas de battement/découpage avant ledit point d'inflexion.

5. Procédé selon la revendication 1 à 4, dans lequel le démarrage de la phase de transition est fixé aux alentours de 75 % du temps du point d'inflexion.

6. Système de commande pour un injecteur de carburant incluant un injecteur de carburant ayant un agencement formant valve actionné par solénoïde, ledit agencement formant valve incluant une armature adaptée à être en contact avec une extrémité proximale d'un pointeau de valve adapté à mettre en oeuvre l'une quelconque des revendications de procédé 1 à 5.
